# EUROPÄISCHE PATENTSCHRIFT

(11) **EP 1 477 923 B1**
(45) Veröffentlichungstag und Bekanntmachung des Hinweises auf die Patenterteilung: **15.03.2006**
(21) Anmeldenummer: 03010628.0
(22) Anmeldetag: 12.05.2003
(51) Int. Cl.: G06K 7/00

(54) **Kartenleser mit absenkbarem Kontaktträger**
Card reader with a pivoting contact carrier
Lecteur de cartes comportant un support de contacts pivotant

(43) Veröffentlichungstag der Anmeldung: 17.11.2004
(73) Patentinhaber: ddm hopt + schuler GmbH & Co. KG., 78628 Rottweil (DE)
(72) Erfinder: Hopt, Jurgen, 78628 Rottweil (DE); Franzmann, Mike, 78628 Rottweil (DE)
(74) Vertreter: Kohler Schmid Möbus

(56) Entgegenhaltungen:
- EP-A- 0 234 654
- EP-A- 0 468 828
- DE-A- 2 952 442
- DE-A- 10 038 944
- US-A- 4 899 035

## Beschreibung

Die vorliegende Erfindung betrifft einen Kartenleser mit einem in Einführrichtung verschiebbar und auf eine eingeführte Karte absenkbar geführten Kontaktträger.

Ein derartiger Kartenleser ist beispielsweise durch die DE 43 12 993 A1 bekannt geworden.

Bei diesem bekannten Kartenleser wird der in die Kartenbahn eingreifende Kontaktträger von der eingeführten Karte mitgenommen und dabei auf die Karte abgesenkt, so dass die Kontakte des Kontaktträgers die Kontaktfelder der Karte kontaktieren.

Aufgabe der vorliegenden Erfindung ist es demgegenüber, bei einem Kartenleser der eingangs genannten Art den Kontaktträger auf andere Art und Weise zu betätigen.

Diese Aufgabe wird erfindungsgemäß durch einem Kartenleser gemäß Anspruch 1 gelöst.

Vorzugsweise ist die mit der Karte zusammenwirkende Seitenfläche des Schwenkhebels konkav gekrümmt, wobei die Krümmung und eine am Kontaktträger vorgesehene Führungskontur für den Schwenkarm derart gewählt sind, dass beim Einführen einer Karte keine Relativverschiebung zwischen der Karte und dem mitgenommenen Kontaktträger auftritt.

Weitere vorteilhafte Ausgestaltungen der Erfindung sind Gegenstand der Unteransprüche.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: eine Draufsicht auf den erfindungsgemäßen Kartenleser mit einem in die Kartenbahn eingreifenden Schwenkarm, der die Bewegung eines Kontaktträgers steuert;

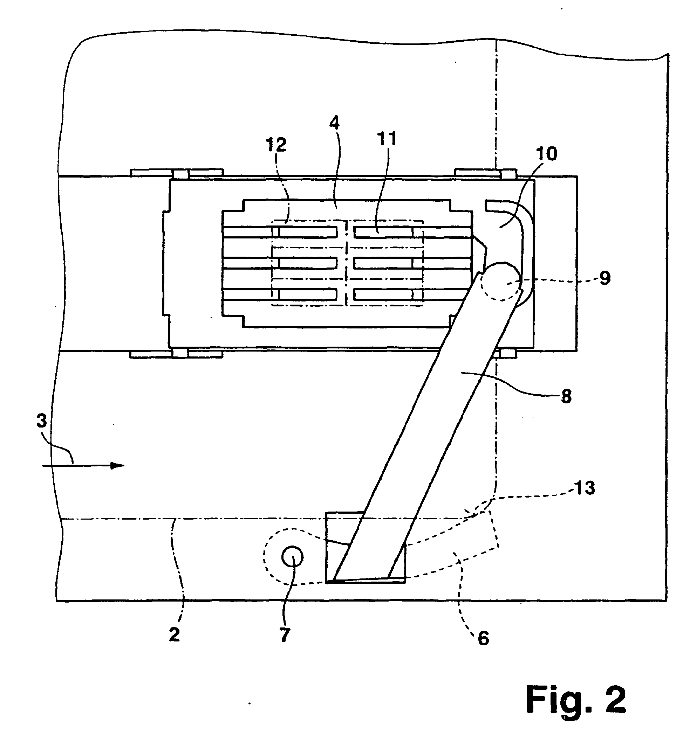

- Fig. 2: den Kartenleser der Fig. 1 mit dem durch die eingeführte Karte aus der Kartenbahn ausgelenkten Schwenkarm;

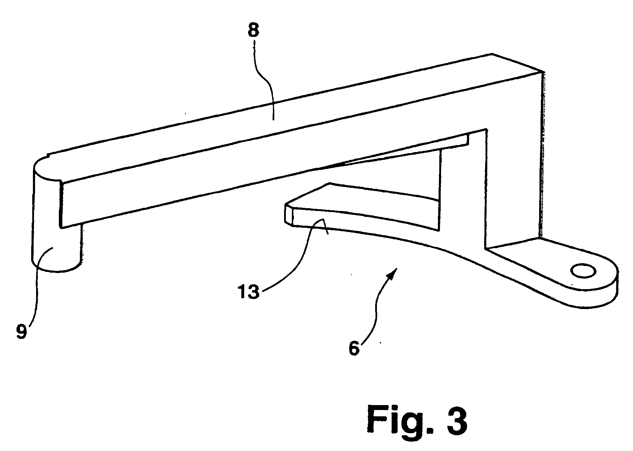

- Fig. 3: eine perspektivische Ansicht des in Fign. 1 und 2 gezeigten Schwenkarms; und

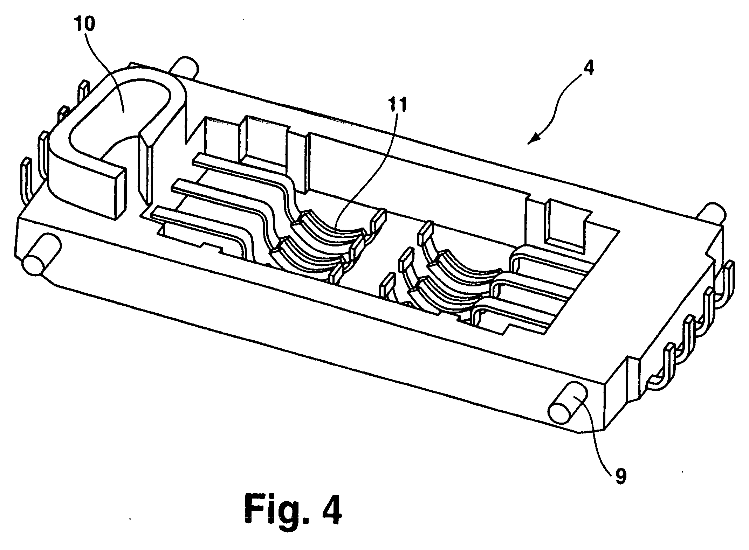

- Fig. 4: eine perspektivische Ansicht des in Fign. 1 und 2 gezeigten Kontaktträgers.

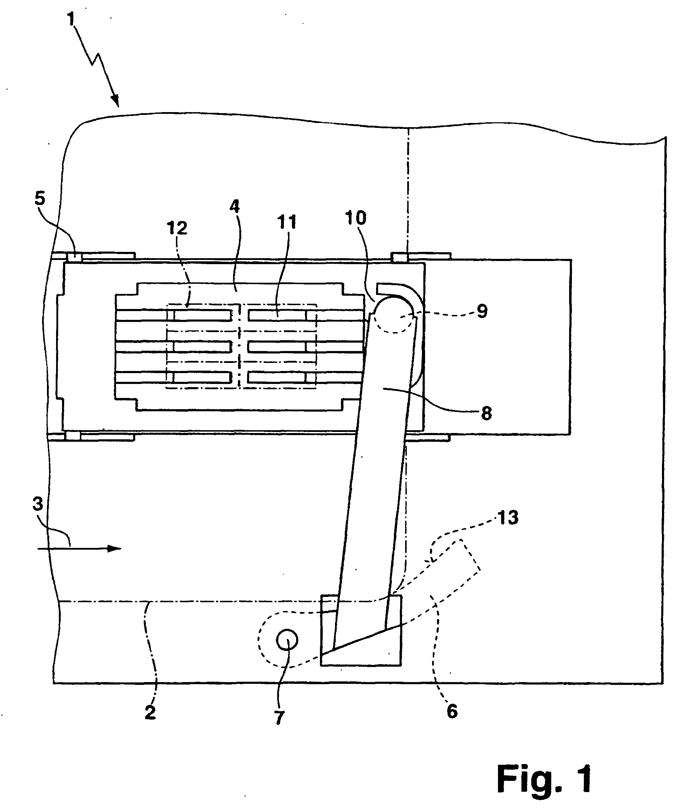

In **Fig. 1** ist mit **1** ein sogenannter Push/Pull-Kartenleser bezeichnet, bei dem eine Karte **2** durch den Benutzer in Einführrichtung **3** bis zur Anlage an einen Kartenanschlag (nicht gezeigt) in ihre Datenaustauschposition in den Kartenleser **1** eingeführt und nach dem Datenaustausch vom Benutzer wieder aus dem Kartenleser **1** herausgezogen wird.

Im Kartenleser 1 ist ein Kontaktträger **4** in Einführrichtung **3** verschiebbar und auf eine eingeführte Karte **2** absenkbar geführt. Dazu sind seitlich am Kontaktträger **4** Zapfen **5** vorgesehen, die in seitliche Führungen (nicht gezeigt) des Kartenlesergehäuses eingreifen. Weiterhin ist im Kartenleser 1 ein in Einführrichtung gerichteter Schwenkhebel **6** um eine rechtwinklig zur Kartenbahn verlaufende Achse **7** gelagert, der in seiner in Fig. 1 gezeigten Ausgangsstellung seitlich in die Kartenbahn eingreift und von der eingeführten Karte 2 gegen die Wirkung einer Rückstellfeder (nicht gezeigt) aus der Kartenbahn auslenkbar ist. Vom Schwenkhebel 6 steht ein Arm **8** ab, der mit dem Kontaktträger 4 bewegungsgekoppelt ist. An der Unterseite des Arms **8** ist ein runder Zapfen **9** vorgesehen, der in einer quer zur Einführrichtung 3 verlaufenden Führung **10** des Kontaktträgers 4 verschiebbar geführt ist. Der Schwenkhebel 6 und der Arm 8 sind als einstückiges Spritzgussteil ausgebildet. Auf der dem Schwenkhebel 6 gegenüberliegenden Seite der Kartenbahn ist eine Auswurföffnung (nicht gezeigt) für zu kurze Karte vorgesehen.

Wenn die Karte 2 in den Kartenleser 1 eingeschoben wird, trifft sie mit ihrer Vorderkante auf den Schwenkarm 6. Zu diesem Zeitpunkt befinden sich die Kontakte **11** des Kontaktträgers **4** im Abstand über den Kontaktfeldern **12** der Karte 2. Durch Weiterschieben der Karte 2 wird der Schwenkarm 6 im Uhrzeigersinn aus der Kartenbahn ausgelenkt, wodurch auch der Arm 8 im Uhrzeigersinn verschwenkt.

Über den Zapfen 9 des Arms 8 wird dabei der Kontaktträger 4 in Einführrichtung 3 mitgenommen, wobei der Zapfen 9 der Führung 10 folgt.

Die mit der Karte 2 zusammenwirkende Seitenfläche 13 des Schwenkhebels 6 ist konkav gekrümmt, wobei die Krümmung der Seitenfläche 13 und die Kontur der Führung 10 derart gewählt sind, dass beim Einführen der Karte 2 keine Relativverschiebung zwischen der Karte 2 und dem mitgenommenen Kontaktträger 4 auftritt. So ist sichergestellt, dass die Kontakte 11 des Kontaktträgers 4 nicht auf den Kontaktfeldern 12 der Karte schleifen und die Kontaktfelder 12 dadurch beschädigt werden.

Eine in den Kartenleser 1 eingeführte zu kurze Karte bleibt zunächst im Kartenleser 1 stecken und wird beim Einführen einer weiteren Karte durch die konkave Seitenfläche 13 des Schwenkarms 6 zur Auswurföffnung gelenkt und seitlich aus dem Kartenleser 1 ausgeworfen.

## Patentansprüche

1. Kartenleser (1) mit einem in Einführrichtung (3) verschiebbar und auf eine eingeführte Karte (2) absenkbar geführten Kontaktträger (4),
**dadurch gekennzeichnet**
**dass** am Kartenlesergehäuse ein Schwenkhebel (6) um eine rechtwinklig zur Einführrichtung (3) und rechtwinklig zur Vorderkante einer eingeführten Karte (2) verlaufende Achse (7) gelagert ist, der aus einer seitlich in die Kartenbahn eingreifenden Ausgangsstellung von einer eingeführten Karte (2) gegen die Wirkung einer Rückstellkraft aus der Kartenbahn ausgelenkt wird und den Kontaktträger (4) in Einführrichtung (3) mitnimmt.

2. Kartenleser nach Anspruch 1, **dadurch gekennzeichnet, dass** die mit der Karte (2) zusammenwirkende Seitenfläche (13) des Schwenkhebels (6) konkav gekrümmt ist.

3. Kartenleser nach Anspruch 1 oder 2, **dadurch gekennzeichnet, dass** vom Schwenkhebel (6) ein Arm (8) absteht, der mit dem Kontaktträger (4) bewegungsgekoppelt ist.

4. Kartenleser nach Anspruch 3, **dadurch gekennzeichnet, dass** der Arm (8) des Schwenkhebels (6) im Kontaktträger (4) verdrehbar gelagert ist.

5. Kartenleser nach Anspruch 3 oder 4, **dadurch gekennzeichnet, dass** der Arm (8) des Schwenkhebels (6) im Kontaktträger (4) quer zur Einführrichtung (3) verschiebbar geführt ist.

6. Kartenleser nach Anspruch 5, **dadurch gekennzeichnet, dass** die Krümmung der mit der Karte (2) zusammenwirkenden Seitenfläche (13) des Schwenkhebels (6) und die Führungskontur der Führung (10) des Kontaktträgers (4) derart gewählt sind, dass beim Einführen einer Karte (2) keine Relativverschiebung zwischen der Karte (2) und dem mitgenommenen Kontaktträger (4) auftritt.

7. Kartenleser nach einem der Ansprüche 3 bis 6, **dadurch gekennzeichnet, dass** der Schwenkhebel (6) und sein Arm (8) als ein einstückiges Teil, insbesondere als ein Spritzgussteil, ausgebildet sind.

8. Kartenleser nach einem der vorhergehenden Ansprüche, **dadurch gekennzeichnet, dass** der Schwenkarm (8) in Einführrichtung (3) gerichtet ist.

9. Kartenleser nach einem der vorhergehenden Ansprüche, **dadurch gekennzeichnet, dass** auf der dem Schwenkhebel (6) gegenüberliegenden Seite der Kartenbahn eine Auswurföffnung vorgesehen ist.

## Claims

1. Card reader (1) comprising a contact carrier (4) which is guided in such a manner that it can be displaced in insertion direction (3) and can be lowered onto an inserted card (2),
**characterized in**
**that** a pivot lever (6) is disposed on the card reader housing about an axis (7) which extends at a right angle to the insertion direction (3) and at a right angle to the front edge of an inserted card (2), wherein the pivot lever (6) is deflected by an inserted card (2) from an initial position in which it laterally engages into the card path, out of the card path against the action of a restoring force and carries along the contact carrier (4) in the insertion direction (3).

2. Card reader according to claim 1, **characterized in that** the side surface (13) of the pivot lever (6) that cooperates with the card (2) is concavely curved.

3. Card reader according to claim 1 or 2, **characterized in that** an arm (8) projects from the pivot lever (6) and is motionally coupled to the contact carrier (4).

4. Card reader according to claim 3, **characterized in that** the arm (8) of the pivot lever (6) is disposed in the contact carrier (4) such that it can be rotated.

5. Card reader according to claim 3 or 4, **characterized in that** the arm (8) of the pivot lever (6) is guided in the contact carrier (4) in a transverse direction relative to the insertion direction (3).

6. Card reader according to claim 5, **characterized in that** the curvature of the side surface (13) of the pivot lever (6), that cooperates with the card (2), and the guiding contour of the guidance (10) of the contact carrier (4) are selected in such a manner that there is no relative displacement between the card (2) and the carried-along contact carrier (4) when the card (2) is inserted.

7. Card reader according to any one of the claims 3 through 6, **characterized in that** the pivot lever (6) and its arm (8) are formed in one piece, in particular, as injection-molded part.

8. Card reader according to any one of the preceding claims, **characterized in that** the pivot arm (8) is directed in the insertion direction (3).

9. Card reader according to any one of the preceding claims, **characterized in that** an ejector opening is provided on the side of the card path opposite to the pivot lever (6).

## Revendications

1. Lecteur de cartes (1) comportant un support de contacts (4) guidé avec faculté de translation en direction d'introduction (3) et avec faculté d'abaissement sur une carte introduite (2),
**caractérisé en ce que**
sur le boîtier du lecteur de cartes est monté un levier (6) pivotant autour d'un axe (7) s'étendant à angle droit par rapport à la direction d'introduction (3) et à angle droit par rapport à l'arête antérieure d'une carte introduite (2), levier qui est dévié hors de la trajectoire de carte par une carte introduite (2) à partir d'une position de départ, engagée latéralement dans la trajectoire de la carte, à l'encontre de l'effet d'une force de rappel, et qui entraîne le support de contacts (4) en direction d'introduction (3).

2. Lecteur de cartes selon la revendication 1, **caractérisé en ce que** la surface latérale (13) du levier pivotant (6) qui coopère avec la carte (2) est incurvée de façon concave.

3. Lecteur de cartes selon l'une ou l'autre des revendications 1 et 2, **caractérisé en ce que** du levier pivotant (6) fait saillie un bras (8) qui est couplé en termes de mouvement avec le support de contacts (4).

4. Lecteur de cartes selon la revendication 3, **caractérisé en ce que** le bras (8) du levier pivotant (6) est monté avec faculté de rotation dans le support de contacts (4).

5. Lecteur de cartes selon l'une ou l'autre des revendications 3 et 4, **caractérisé en ce que** le bras (8) du levier pivotant (6) dans le support de contacts (4) est guidé avec faculté de translation transversalement à la direction d'introduction (3).

6. Lecteur de cartes selon la revendication 5, **caractérisé en ce que** la courbure de la surface frontale (13) du levier pivotant (6) coopérant avec la carte (2) et le contour du guidage (10) du support de contacts (4) sont choisis de telle sorte que lors de l'introduction d'une carte (2), il ne se produit pas de translation relative entre la carte (2) et le support de contacts (4) entraîné.

7. Lecteur de cartes selon l'une des revendications 3 à 6, **caractérisé en ce que** le levier pivotant (6) et son bras (8) sont réalisés sous la forme d'une pièce d'un seul tenant, en particulier sous la forme d'une pièce coulée par injection.

8. Lecteur de cartes selon l'une des revendications précédentes, **caractérisé en ce que** le bras pivotant (8) est dirigé en direction d'introduction (3).

9. Lecteur de cartes selon l'une des revendications précédentes, **caractérisé en ce qu'**une ouverture d'éjection est prévue sur le côté de la trajectoire de carte opposé au levier pivotant (6).
